(19) Europäisches Patentamt

European Patent Office

Office européen des brevets

(11) **EP 1 378 955 A2**

(12) **EUROPEAN PATENT APPLICATION**

(43) Date of publication:
**07.01.2004 Bulletin 2004/02**

(51) Int Cl.[7]: **H01M 8/10**

(21) Application number: **03012548.8**

(22) Date of filing: **02.06.2003**

(84) Designated Contracting States:
**AT BE BG CH CY CZ DE DK EE ES FI FR GB GR HU IE IT LI LU MC NL PT RO SE SI SK TR**
Designated Extension States:
**AL LT LV MK**

(30) Priority: **05.07.2002 JP 2002197115**

(71) Applicant: **NISSAN MOTOR CO., LTD.**
**Yokohama-shi Kanagawa-ken (JP)**

(72) Inventors:
• **Aoki, Osamu**
**Tokyo (JP)**
• **Miyazawa, Atsushi**
**Yokosuka-shi, Kanagawa (JP)**

(74) Representative: **Schaeberle, Steffen**
**Hoefer & Partner,**
**Patentanwälte,**
**Gabriel-Max-Strasse 29**
**81545 München (DE)**

(54) **Fuel cell**

(57) A fuel cell performs electro-chemical reactions of a gas passing through an electrolyte membrane (8). A gas diffusion layer (2) is gripped between the electrolyte membrane (8) and a separator (1). A gas supply passage (5) facing the gas diffusion layer (2) and a gas discharge passage (6) facing the gas diffusion layer (2) are disposed alternately in parallel in the separator (1). The moisture concentration in the gas diffusion layer (2) is made uniform by adapting the direction of gas flow in the gas supply passage (5) to be opposite to the direction of gas flow in the gas discharge passage (6).

FIG. 1

EP 1 378 955 A2

## Description

FIELD OF THE INVENTION

This invention relates to the disposition of gas passages for a fuel cell.

BACKGROUND OF THE INVENTION

A polymer electrolyte fuel cell (PEFC) or a solid polymer electrolyte membrane fuel cell (PEMFC) are provided with a cathode and an anode comprising a platinum catalyst on the surface of an electrolyte membrane. The anode and the cathode are respectively covered by a gas diffusion layer (GDL). A separator is provided on the outer side of each GDL. A gas passage is formed in the separator facing the GDL.

When the fuel cell is generating power, hydrogen is supplied to the anode by allowing flow of a gas containing hydrogen in the gas passage in one of the separators. The cathode is supplied with oxygen by allowing flow of a gas containing oxygen in the gas passage in the other separator. Power generation operations are performed as a result of the following electro-chemical reactions using a platinum catalyst. The electro-chemical reactions occur in the cathode and the anode between the electrolyte membrane and the GDL.

$$\text{anode: } H_2 \rightarrow 2H^+ + 2e^- \qquad (1)$$

$$\text{cathode: } 2H^+ + 2e^- + \frac{1}{2} O_2 \rightarrow H_2O \qquad (2)$$

The accumulation of water produced by the reaction (2) above in proximity to the surface of the electrolyte membrane inhibits the supply of the hydrogen-containing gas to the anode and the supply of the oxygen-containing gas to the cathode. This has adverse effects on the power generation performance of the fuel cell. In a PEMFC, it is necessary to maintain the moisturisation of the electrolyte membrane in order to ensure proton movement in the electrolyte membrane. Power generation performance is adversely affected when the electrolyte membrane becomes dry.

SUMMARY OF THE INVENTION

JP 11-016591 published by the Japanese Patent Office in 1999 discloses an arrangement in which the gas passage in the separator is divided into gas supply passages which supply reaction gas to the catalyst and gas discharge passages which discharge gas after reactions from the proximity of the catalyst. The gas supply passages and the gas discharge passages are disposed alternately and gas is supplied to the gas supply passages. This arrangement of the gas supply/discharge passages increases the reactive surface area and improves water discharge performance.

In this prior art technique, there is a tendency for the electrolyte membrane to dry out near to the inlet of the gas supply passages due to the fact that the reactive gas does not contain water. As a result, there are large deviations in the level of moisture across the electrolyte membrane and it is difficult to obtain a preferred overall power generation efficiency in the fuel cell.

It is therefore an object of this invention to ensure a uniform distribution of moisture in the GDL.

In order to achieve the above object, this invention provides a fuel cell performing electric power generation according to an electro-chemical reaction of gas passing through an electrolyte membrane.

The fuel cell comprises a gas diffusion layer facing the electrolyte membrane and a separator gripping the gas diffusion layer with the electrolyte membrane.

In the separator, a gas supply passage and a gas discharge passage are alternately formed in parallel to cause gas flow in mutually opposite directions.

The details as well as other features and advantages of this invention are set forth in the remainder of the specification and are shown in the accompanying drawings.

BRIEF DESCRIPTION OF THE DRAWINGS

FIG. 1 is a sectional diagram of a fuel cell according to this invention.

FIG. 2 is a schematic plan view of a part of a separator according to this invention.

FIGs. 3A and 3B are cross sectional views of the separator taken along a line IIIA-IIIA and a line IIIB-IIIB in FIG. 2.

FIG. 4 is a cross sectional view of a part of the separator taken along a line IV - IV in FIG. 2.

FIG. 5 is similar to FIG. 2 but showing a second embodiment of this invention.

FIG. 6 is a diagram showing the flow resistance in a gas diffusion layer according to the second embodiment of this invention.

FIG. 7A and 7B are enlarged plan views of carbon fiber in the gas diffusion layer according to the second embodiment of this invention.

DESCRIPTION OF THE PREFERRED EMBODIMENTS

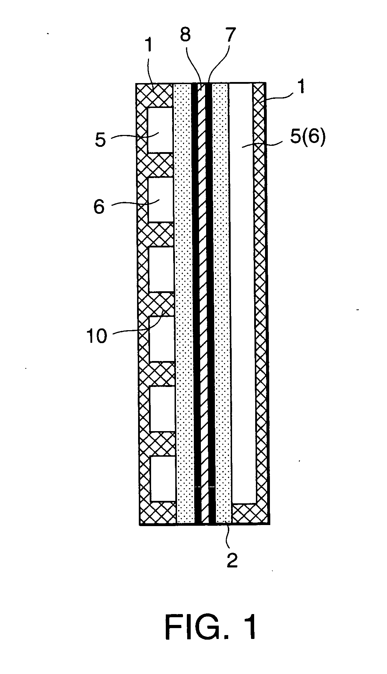

Referring to FIG. 1 of the drawings, a solid polymer electrolyte fuel cell according to this invention comprises a catalyst layer 7 formed on both sides of an electrolyte membrane 8 and a gas diffusion layer (GDL) 2 formed on the outer side of the catalyst layer 7. The electrolyte membrane 8, the catalyst layer 7 and the GDL 2 are integrated as a membrane electrode assembly (MEA). The membrane electrode assembly is sandwiched by a pair of separators 1 comprising a conductive material. Gas supply passages 5 are disposed alternately in parallel with gas discharge passages 6 in the separator 1 facing the GDL 2. The gas supply passage 5 and the gas discharge passage 6 for one separator 1 are disposed orthogonal with respect to the gas supply passage 5 and the gas discharge passage 6 of the other separator 1.

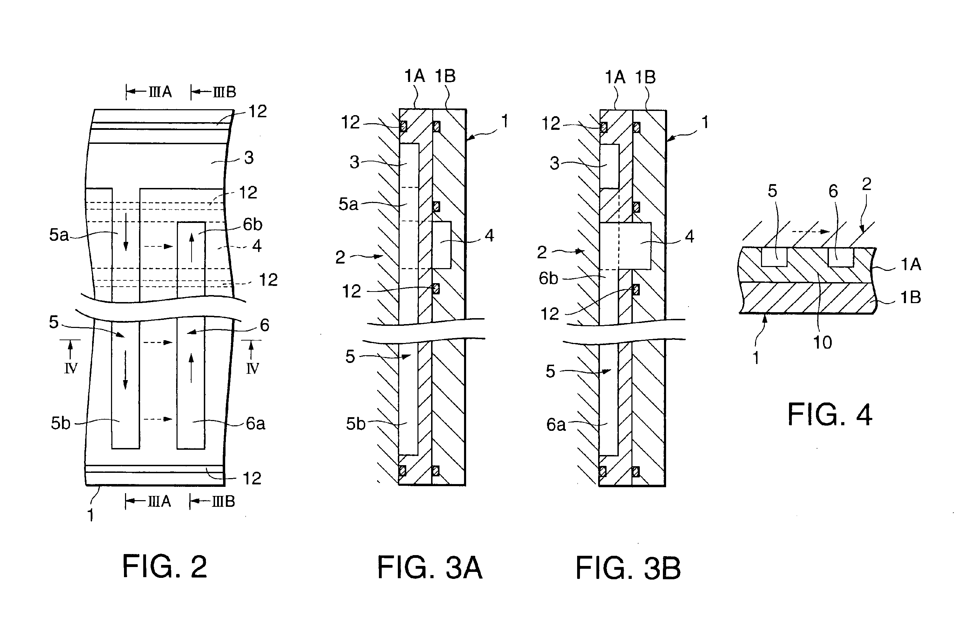

Referring now to FIGs. 2 - 4, one end of each gas supply passage 5 is closed. The other end is connected to a gas supply manifold 3 formed in the separator 1. Reaction gas is supplied from the outside to the gas supply manifold 3. Each gas discharge passage 6 is partitioned from the adjacent gas supply passage 5 by a rib 10 which forms a part of the separator 1. One end of each gas discharge passage 6 is closed and the other end is connected to a gas discharge manifold 4.

As shown in FIG. 2, the gas discharge manifold 4 is disposed so that the direction of gas flow in the gas discharge passages 6 is opposite to the direction of gas flow in the gas supply passages 5. Specifically, an upstream section 5a of a gas supply passage 5 makes close contact with a downstream section 6b of an adjacent gas discharge passage 6.

A downstream section 5b of the gas supply passage 5 makes close contact with an upstream section 6a of the gas discharge passage 6.

Consequently it is necessary to form the gas discharge manifold 4 in proximity to the gas supply manifold 3. The fuel cell is generally not used as a single unit but is used as a fuel cell stack comprising a plurality of laminated fuel cells. Thus the dimensions with respect to the direction of stacking in the separator 1 must be constant. Therefore as shown in FIG. 4, the gas discharge manifold 4 and the gas supply manifold 3 are formed at divergent positions with respect to both the direction of stacking and the transverse direction in a range which allows for a certain separator thickness. In order to realize such a construction, it is preferable that the separator 1 is made of a plate 1A and a plate 1B laminated together. The gas supply manifold 3 and the gas discharge manifold 4 are respectively surrounded by a seal 12 to prevent leakage of gas.

The above construction of the passages 5 and 6 allows gas supplied to the gas supply passage 5 to flow to the gas discharge passage 6 through the GDL 2 as shown in FIG. 4. More precisely, in the upstream section 5a of the gas supply passage 5, the gas permeating the GDL 2 flows to the downstream section 6b of the gas discharge passage 6. In the downstream section 5b of the gas supply passage 5, the gas permeating the GDL 2 flows to the upstream section 6a of the gas discharge passage 6.

With respect to gas flow in the gas supply passage 5, the gas in the downstream section 5b has higher moisture content than the gas in the upstream section 5a due to the fact that moisture produced in the GDL 2 is absorbed by the gas in the gas supply passage 5 when the gas flows from the upstream section 5a to the downstream section 5b. The direction of gas flow in the gas discharge passage 6 also means that moisture content of the gas in the downstream section 6b is higher than the gas in the upstream section 6a due to the fact that moisture produced in the GDL 2 is absorbed as the gas flows from the upstream section 6a to the downstream section 6b.

In this fuel cell, since the direction of flow in the gas supply passage 5 is opposite to the direction of flow in the gas discharge passage 6, the gas in the upstream section 5a in the gas supply passage which displays a low moisture content becomes mixed with the gas having a high moisture content flowing to the downstream section of the gas discharge passage 6. The gas in the downstream section 5b of the gas supply passage 5 which displays a high moisture content is mixed with the gas displaying a low moisture content flowing to the upstream section 6a of the gas discharge passage 6.

As a result, in the GDL 2, a moisture concentration gradient is produced between the upstream section 5a and the downstream section 6b and between the downstream section 5b and the upstream section 6b. Consequently moisture in the GDL 2 migrates from the downstream section 6b towards the upstream section 5a and from the downstream section 5b towards the upstream section 6a. As a result, the moisture concentration in the GDL 2 becomes uniform.

In the prior art technique, gas in the upstream section of the gas supply passage which displays a low moisture content flows to the upstream section of the discharge passage and becomes mixed with gas having a low moisture content. Gas in the downstream section of the gas supply passage which has a high moisture content flows to the downstream section of the gas discharge passage and becomes mixed with gas having a high moisture content. This tends to suppress a water concentration gradient in the gas passage in the GDL 2 between the gas supply passage and the gas discharge passage. Consequently moisture is insufficient in the GDL 2 in the upstream section of the gas supply passage and the gas discharge passage and there is an excess of moisture in the GDL 2 in the downstream section of the gas supply passage and the gas discharge passage.

According to this invention, since the moisture concentration in the GDL 2 is made uniform by setting the direction of gas flow in the gas supply passage to be opposite to the direction of gas flow in the gas discharge passage, it is possible to prevent sections of the electrolyte membrane 8 from being insufficiently moisturized and to prevent the gas diffusion in the GDL 2 from being obstructed due to excessive moisture in the GDL 2. Thus the power generation performance of the fuel cell can be improved.

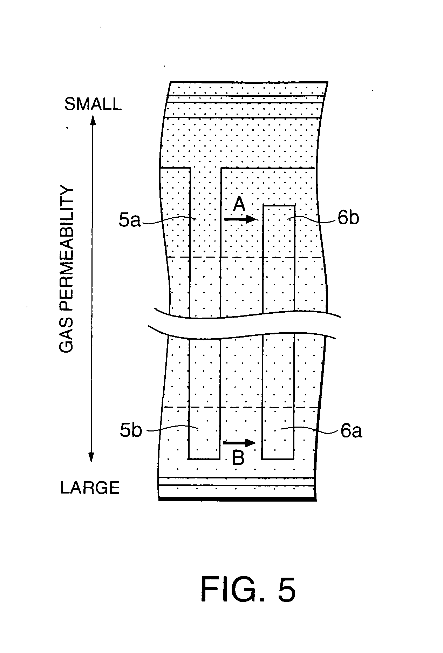

Referring to FIG. 5, a second embodiment of this invention will be described.

In this embodiment, gas permeability in the GDL 2 is varied so that the pressure loss in a route A extending from the upstream section 5a of the gas supply passage 5 to the downstream section 6b of the gas discharge passage 6 differs from a route B extending from the downstream section 5b of the gas supply passage 5 to the upstream section 6a of the gas discharge passage 6.

The route B for gas flow has a greater overall length in comparison to the route A and thus displays a larger overall pressure loss. In contrast, the large amount of moisture present in the downstream section 5b of the gas supply passage 5 corresponding to the inlet of the route B inhibits gas flow into the route B. Thus the flow rate per unit width of the GDL 2 for gas passing through the route B is smaller than the flow rate per unit width of the GDL 2 for gas passing through the route A.

In this embodiment, gas permeability in the GDL 2 increases progressively from the upstream section 5a to the downstream section 5b of the gas supply passage 5 in order to reduce the differential in the flow rate. This arrangement is enabled by combining a plurality of materials in the GDL which display different gas permeability. In other respects, the structure of the fuel cell is the same as that described with reference to the first embodiment.

According to this embodiment, since gas flow from the gas supply passage 5 through the GDL 2 to the gas discharge passage 6 through the GDL 2 is uniform, moisture discharge performance for moisture produced in the GDL 2 is uniform. Furthermore since gas passing through the GDL 2 comes into contact with the catalyst layer 7 when performing electro-chemical reactions, a uniform flow rate distribution in the GDL 2 improves reaction performance. These improvements in the uniformity of discharge performance and the improvement in the reaction efficiency improve the power generation performance of the fuel cell.

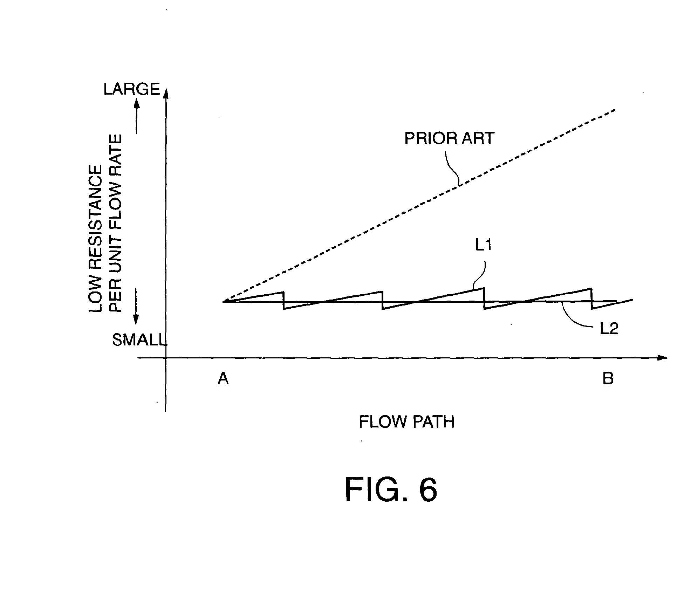

Instead of varying the gas permeability in the GDL 2 progressively, it is possible to make further improvement to power generation efficiency and to increase the uniformity of the flow rate of gas in the GDL 2 by employing a GDL material which varies the gas permeability continuously. FIG. 6 shows the flow resistance per unit gas flow amount in the GDL 2 from the route A to the route B. The broken line shows the prior art technique. The straight line L1 shows flow resistance when the gas permeability in the GDL 2 is varied in a stepwise manner. The straight line L2 shows flow resistance when the gas permeability in the GDL 2 is varied continuously.

The GDL 2 is arranged in the following manner in order to vary the gas permeability in a continuous manner. The GDL 2 is formed by fixing carbon fibers disposed in a plane. It is possible to vary the gas permeability of the GDL 2 continuously by reducing the density of carbon fibers from the upstream section 5a to the downstream section 5b of the gas supply passage 5.

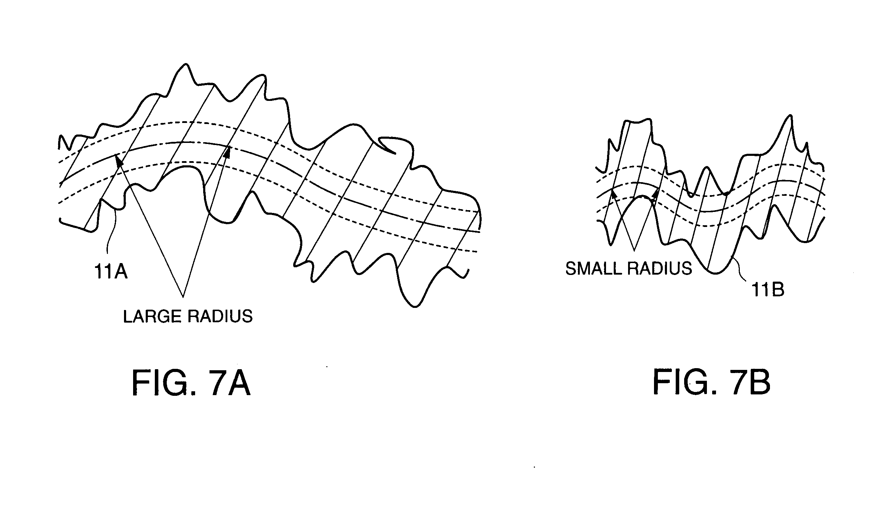

Alternatively as shown in FIG. 7A and 7B, it is possible to vary gas permeability by varying the length of the carbon fibers. In other words, it is possible to increase gas permeability by using long carbon fibers. The length of carbon fibers used in the GDL 2 generally ranges from 100 micrometers to 500 micrometers. The carbon fibers are mixed with a binder. However when performing the mixing operation, the carbon fibers are oriented in all directions and laminated with each other with a gap.. As a result, when long carbon fibers 11A are used as shown in FIG. 7A the gap between laminated fibers is larger than the situation in which short carbon fibers 11B are used as shown in FIG. 7B. The curve in the figure corresponds to the radius of the gap between the fibers. Thus the section comprising 100-micrometer fibers displays lower gas permeability than a section using 500-micrometer fibers.

The length of the carbon fibers used in the GDL 2 can be gradually increased from the upstream section 5a to the downstream section 5b of the gas supply passage 5. This allows the gas permeability of the GDL 2 to be continuously varied in a cost-effective structure.

Alternatively it is possible to vary the gas permeability by varying the diameter of the carbon fiber. The formation of a large gap between the fibers is facilitated by increasing the diameter of the carbon fibers.

When the fibers of a large diameter are used to form the GDL, a large gap is likely to be formed between adjacent fibers, which decreases the fiber density per unit volume of the GDL, and increases as a result the gas permeability of GDL.

By gradually increasing the diameter of carbon fiber used for forming GDL 2 from upstream section 5a towards the downstream section 5b of the gas supply passage 5, the gas permeability of the GDL 2 can be continuously varied in a cost-effective structureÅB

When the gas permeability of the GDL 2 is varied by varying the dimensions of the gap or the density of the carbon fiber, there is the possibility that the strength of the GDL 2 in sections displaying high gas permeability will be reduced. The fuel cell is used as a stack in which a plurality of fuel cells are laminated together in a series. When the fuel cells are laminated, a tightening pressure is applied with respect to the direction of lamination in order to ensure an effective seal for reaction gases and in order to reduce contact resistance between the electrolyte membrane 8 and the GDL 2.

The GDL 2 having a constant thickness and displaying localized variation in the level of gas permeability has a portion of which the structural strength is relatively low due to high gas permeability. Such a portion may be damaged when the fuel cells are stacked and tightened. It is therefore preferable to apply high-strength fiber in the portion having a high gas permeability.

In this manner, it is possible to maintain the seal characteristics during lamination of the fuel cell and to maintain the contact resistance between the GDL 2 and the electrolyte membrane 8 to a preferred level while at the same time preventing damage to the fuel cell as a result of the tightening pressure.

Alternatively it is preferred that the thickness of the GDL 2 is increased at positions displaying low gas permeability. When gas permeability is increased as a result of increasing the diameter of the carbon fiber, the thickness of small diameter positions or positions displaying low gas permeability is greater than in other positions. When the fuel cell is laminated, tightening pressure is applied to the fuel cell with respect to the direction of lamination in order to ensure air-tight characteristics of the seal and in order to reduce the contact resistance between the GDL 2 and the catalyst layer 7. When the pressure is applied in a uniform manner, sections in the GDL 2 comprising thin low-strength fibers are more likely to undergo large levels of compressive deformation than sections formed by thick high-strength fibers. Thus the thickness of sections formed from thin fibers is adapted to be larger than other sections so that the thickness of the GDL 2 is constant when tightening pressure is applied with respect to the direction of lamination.

Thus it is possible to maintain the contact resistance between the GDL 2 and the electrolyte membrane 8 or the seal characteristics during lamination of the fuel cell to a preferred level. Furthermore it is possible to prevent the tightening pressure from damaging the fuel cell.

The contents of Tokugan 2002-197115, with a filing date of July 5, 2002 in Japan, are hereby incorporated by reference.

Although the invention has been described above by reference to certain embodiments of the invention, the invention is not limited to the embodiments described above. Modifications and variations of the embodiments described above will occur to those skilled in the art, in light of the above teachings.

For example, in each of the above embodiments, a catalyst layer 7 is formed between the GDL 2 and the electrolyte membrane 8, but this invention can also be applied to fuel cells in which a catalyst is dispersed as particles within the GDL 2.

The embodiments of this invention in which an exclusive property or privilege is claimed are defined as follows:

## Claims

1. A fuel cell performing electric power generation according to an electro-chemical reaction of gas passing through an electrolyte membrane, comprising:

    a gas diffusion layer (2) facing the electrolyte membrane (8); and
    a separator (1) gripping the gas diffusion layer (2) with the electrolyte membrane (8), a gas supply passage (5) and a gas discharge passage (6) being alternately formed in parallel in the separator (1) to cause gas flow in mutually opposite directions.

2. The fuel cell as defined in Claim 1, wherein the gas diffusion layer (2) has an upstream section and a downstream section with respect to a flow of gas in the gas supply passage (5), and a gas permeability of the upstream section is set to be larger than a gas permeability of the downstream section.

3. The fuel cell as defined in Claim 2, wherein the gas permeability of the gas diffusion layer (2) is set to cause a flow rate of gas per unit width of the gas diffusion layer (2) which flows from the gas supply passage (5) to the gas discharge passage (6) to be constant at any portion in the gas diffusion layer (2).

4. The fuel cell as defined in Claim 2 or Claim 3, wherein the gas diffusion layer (2) comprises fibers and the gas permeability of the upstream section is set to be larger than the gas permeability of the downstream section by decreasing a density of the fibers in the upstream section with respect to a density of the fibers in the downstream section.

5. The fuel cell as defined in Claim 2 or Claim 3, wherein the gas diffusion layer (2) comprises fibers and the gas permeability of the upstream section is set to be larger than the gas permeability of the downstream section by increasing a radius of a gap formed between fibers in the upstream section with respect to a radius of a gap formed between fibers in the downstream section.

6. The fuel cell as defined in Claim 2 or Claim 3, wherein the gas diffusion layer (2) comprises fibers and the gas permeability of the upstream section is set to be larger than the gas permeability of the downstream section by increasing a radius of the fiber in the upstream section with respect to a radius of the fiber in the downstream section.

7. The fuel cell as defined in any one of Claim 2 through Claim 6, wherein the gas diffusion layer (2) comprises fibers and a strength of the fibers used in the gas diffusion layer (2) is set to become larger as the gas permeability of the gas diffusion layer (2) becomes higher.

8. The fuel cell as defined in any one of Claim 2 through Claim 6, wherein the gas diffusion layer (2) comprises fibers and a thickness of the gas diffusion layer (2) is increased as the gas permeability of the gas diffusion layer (2) becomes lower.

9. The fuel cell as defined in any one of Claim 1 through Claim 8, wherein the supply passage (5) comprises an upstream section (5a) and a downstream section (5b) relative to the direction of gas flow, the discharge passage (6) comprises an upstream section (6a) and a downstream section (6b) relative to the direction of gas flow, and in the gas diffusion layer (2), moisture in the downstream section (6b) of the discharge passage (6) diffuses to the upstream section (5a) of the supply passage (5) and moisture in the downstream section (5b) of the supply passage (5) diffuses to the upstream section (6b) of the discharge passage (6).

10. The fuel cell as defined in any one of Claim 1 through Claim 9, wherein a gas supply manifold (3) and a gas discharge manifold (4) are formed in proximity in the separator (1), the gas supply passage (5) has two ends of which one end is closed and the other end is connected to the gas supply manifold (3), and the discharge passage (6) has two ends of which one is closed and the other end is connected to the gas discharge manifold (4).

11. The fuel cell as defined in Claim 10, wherein the separator (1) comprises stacked body of a plate (1A) in which the gas supply passage (5) facing the gas diffusion layer (2), the gas discharge passage (6) facing the gas diffusion layer (2) and the gas supply manifolds (3) are formed, and a plate (1B) in which the gas discharge manifold (4) is formed.

FIG. 1

FIG. 2

FIG. 3A

FIG. 3B

FIG. 4

FIG. 5

FIG. 6

LARGE RADIUS

FIG. 7A

SMALL RADIUS

FIG. 7B

EP 1 378 955 A2